# EUROPEAN PATENT APPLICATION

(11) **EP 2 674 377 A1**
(43) Date of publication of application: **18.12.2013**
(21) Application number: 13171192.1
(22) Date of filing: 10.06.2013
(51) Int. Cl.: B65H 29/66

(54) **A sheet collecting device**

(30) Priority: 11.06.2012 IT MI20121005
(71) Applicant: Italdry S.r.L., 20836 Briosco (Monza Brianza) (IT)
(72) Inventor: Brivio, Giuseppe, I - 20044 BESANA BRIANZA (Monza Brianza) (IT); Rossi, Renato, I - 20045 BIASSONO (Monza Brianza) (IT)
(74) Representative: Lunati & Mazzoni S.r.L.

(57) **Abstract**

A collector device (1) for sheets (10) [is provided] comprising a conveyor (20) suitable to move the sheets (10), defining for them a leading portion (11) and a tail portion (12), and defining a support surface (20a) on which the sheets (10) are substantially arranged by gravity reciprocally overlapping the leading portion (11) with the tail portion (12); a pressure body (30), suitable to press on the sheets (10) before they come into contact with the support surface (20a) and comprising at least one substantially rigid contact body (31) and a motor apparatus (32), suitable to command the contact body (31), varying at least the resistance action so as to exert an action substantially exclusively in correspondence with the tail portion (12) of the sheets (10).

## Description

The present invention relates to a collector device for sheets as described in the preamble of claim 1.

In particular, the invention relates to a device adapted to allow for overlap and, therefore, collect sheets of paper material and, preferably, sheets of corrugated cardboard.

As known, corrugated board, once manufactured reaches in the form of a continuous roll, a cutter unit which cuts the corrugated board in a transversal direction dividing the continuous roll into sheets. As soon as they are cut the individual sheets of corrugated board reach a thrust unit which accelerates them compared to the speed of the continuous roll, so as to distance the sheet from the continuous roll and thereby reciprocally distance the individual sheets. Subsequently, the individual sheets are transported by the thrust group and conveyed, by dropping, onto a conveyor belt typical of the known collector devices. The conveyor belt has a lower speed than that of the thrust unit. Consequently the sheets drop onto said conveyor belt positioning themselves like "fish-scales", that is to say with the leading portion of each sheet overlapping the tail portion of the previous sheet.

The sheets, guided by the conveyor belt, lastly reach a container inside which thanks to the "fish-scale" arrangement they distribute themselves in a neat manner.

Lastly, to ensure the "fish-scale" positioning, the collector device has flexible brushes placed between the conveyor belt and the thrust unit suitable to press down on the sheets coming out of the conveyor system so as to brake them. Similar devices comprising said brushes are described in the patent documents DE-A-19824694 and US-B-4577746.

In particular, the sheets of corrugated board, as soon as they begin to leave the thrust unit, strike the ends of the brushes which, by flexing, exert a force on the sheets counter to their advancement, suitable to cause them to slow down. The prior art described above has several significant drawbacks.

A first drawback is represented by the fact that during the collection operations the sheets of corrugated board may suffer warping or other deformations prejudicing their future use.

In detail, such problem is represented by the excessive pressure exerted by the brushes on sheets which, in their central part above all, are unable to adequately oppose such load and thus flex.

Another cause of deformations is the thrust of the brushes simultaneously with the action of the thrust unit and consequently the presence of opposite forces which place the sheets in compression.

In detail, each sheet, as soon as it comes into contact with the brushes is, on the one hand, slowed down by the brushes and on the other, pushed both by the inertia of the sheet itself and by the thrust unit.

The device described in the American patent US-B-3178174, obviates only partially, by means of a mobile and rigid element, the drawbacks mentioned, given that for very thin sheets it has the same drawback. Moreover, said device suffers from significant slowing down due to the movement of the thrust element which does not make it compatible with current production speeds.

Another problem, related to the aforesaid deformations, is represented by the fact that such deformations of the corrugated board entail a high rate of production discards.

A further problem is represented by the fact that to try to resolve the aforesaid problems, the production of corrugated board is appropriately slowed down. The aforementioned problems determine reduced efficiency and high costs in the production of sheets of corrugated board.

In this situation the technical purpose of the present invention is to devise a collector device of sheets able to substantially overcome the drawbacks mentioned above.

Within the sphere of said technical purpose one important aim of the invention is to produce a collector device of sheets of corrugated board which does not cause the deformation of said sheets.

Another important aim of the invention is to devise a collector device making it possible to have production characterised by a practically negligible or in any case greatly limited quantity of discards and thus, particularly efficient production of sheets of corrugated board.

A further aim of the invention is, consequently, to make a collector device for sheets of corrugated board permitting extremely limited production costs.

The technical purpose and specified aims are achieved by a collector device for sheets as described in annexed claim 1.

Preferred embodiment are described in dependent claims.

The characteristics and advantages of the invention are clearly evident from the following detailed description of a preferred embodiment thereof, with reference to the accompanying drawings, in which:
**Figs.1a** and **1b** show the collector device for sheets according to the invention at two different moments of working; and
**Fig. 2** shows a view from above of the collector device for sheets.

With reference to said drawings, reference numeral **1** globally denotes the collector device for sheets according to the invention.

It is suitable to be used to neatly arrange the sheets **10,** that is, membranes of various types and preferably in paper material, or even more preferably in corrugated board, inside a specific container.

In detail, the collector device 1 is suitable to be positioned in a corrugating machine **100** in which, as well as the device 1, a plurality of groups are present which, moving the paper material according to a given advancement trajectory **100a** and along a slide surface **100b,** perform a sequence of operations aimed at obtaining sheets 10. More specifically, the device 1 is suitable to be arranged, according to said trajectory 100a, downstream of a cutter unit **110,** suitable to divide the paper material into sheets 10, and preferably, downstream of a thrust unit **120** suitable to increase the speed of advancement of the sheets 10 coming out of the cutter unit 110 so as to opportunely reciprocally distance said sheets 10.

The collector device 1 comprises, mainly, a conveyor **20** suitable to place the sheets 10 inside a container, and a pressure body **30** suitable to direct the sheets 10 towards the conveyor 20 enabling their partial overlapping. In particular, the body 30 enables a reciprocal overlapping of the sheets 10 known by the expression "fish-scale" **characterised in that** the leading portion **11** of one sheet 10, that is the first portion of the sheet 10 leaving the thrust unit 120, overlaps the tail portion **12** of the previous sheet 10, that is to say the portion of the previous sheet 10, which left the thrust unit 120 last.

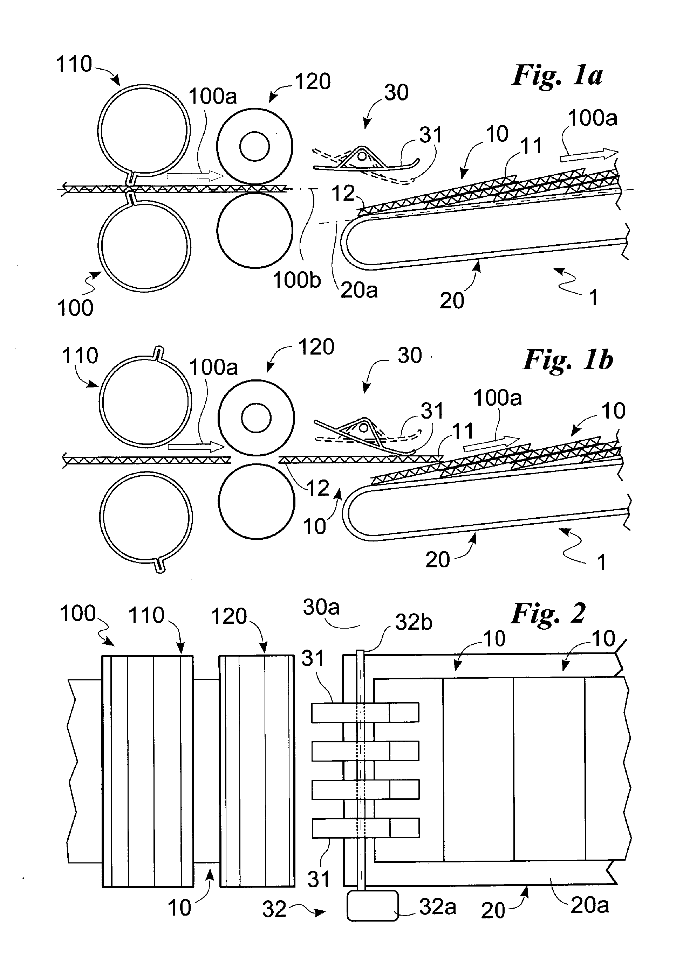

The conveyor 20 comprises a conveyor belt or other similar apparatus suitable to define a support surface **20a** on which, as described better below, the sheets 10, coming out of the units 110 and 120, are substantially arranged by gravity. It is, therefore, positioned, (Figs. 1a-1b) according to the gravitational gradient, under the units 110 and 120 so that the sheets 10 pass from the slide surface 100b to the support surface 20a by gravity, that is falling onto it.

Preferably, in order to facilitate the arrangement of the sheets 10, the conveyor 20 is a vacuum conveyor belt, that is to say a conveyor belt characterised by an inner chamber having a suitable vacuum so that by means of specific holes made on the belt, an air flow is created suitable to pull and retain the sheets 10 against the support surface 20a.

Moreover, the conveyor 20, in order to achieve the "fish-scale" arrangement of the sheets 10 defines an advancement speed of the sheets which is substantially less than 80% of the speed of the sheets coming out of the thrust unit 120, and preferably substantially less than 65% of the speed of the sheets 10 coming out of the group 120.

Functionally positioned between the cutter unit 110 and conveyor 20, the collector device 1 has a pressure body 30 suitable to permit a partial overlapping of the sheets 10 on the support surface 20a.

The pressure body 30, as described in detail below, is suitable to press the sheets 10 against the support surface 20a pressing on a portion of said sheets 10 when such portion is not in contact with said support surface. It is, in addition, suitable to slow down the speed of advancement of the sheets 10 coming out of the cutter unit 110 so as to enable the aforesaid partial overlapping thereof.

The pressure body 30 comprises one or more contact bodies **31,** substantially rigid, suitable to exercise a substantial action, that is suitable to modify the trajectory of the sheet 10, exclusively in correspondence with the tail portion 12 so as to exert a braking force on the sheets 10; and a motor apparatus **32** suitable to command the contact bodies 31. The term substantially rigid is taken to mean in relation to the sheets 10. The bodies 31 are for example made from metal or polymers and are not brushes or elements of similar rigidity.

The motor apparatus 32, comprises a shaft **32b** to which the contact bodies 31 are firmly constrained and, appropriately, equally distanced from each other; and a motor, preferably electric, suitable to control the shaft **32a** and thus the bodies 31 around the axis **30a,** preferably it is substantially parallel to the support surface 20a and even more preferably it is substantially perpendicular to the advancement trajectory 100a.

The motor apparatus 32 is preferably suitable to vary the resistant action, that is, the resistance to external forces, of the contact body 31. Such action is preferably obtained by controlling the torque momentum of the shaft 32b around the axis 30a. The motor apparatus 32 is, in addition, preferably suitable to vary the distance between the contact bodies 31 and the support surface 20a. The motor apparatus 32 is, in addition, preferably suitable to also vary the position of the contact bodies 31.

In detail, the motor apparatus 32 is suitable to simultaneously control the contact bodies 31, in torque and/or position around the rotation axis 30a.

Advantageously, the motor apparatus 32 moves the bodies 31 in such a way that the braking force applied by it to the sheets 10 has an opposite direction to the direction of the trajectory of advancement 100a so as to reduce the speed of the sheets 10 before they come into contact with the surface 20a. In detail, the apparatus 32 rotates or tips the bodies 31 in such a way that, when the bodies 31 come into contact with the sheets 10, the contact bodies 31 have a tangential speed characterised by the opposite direction to the direction of the speed of the sheets 10, that is, to the advancement trajectory 100a.

In particular the motor 32a is a brushless motor or other motor characterised by the possible control of angular momentum or torque and angular position and its derivatives. The motor 32a preferably has low inertia, that is, a particularly low response time to an activation/deactivation signal and, preferably substantially less than 25 ms, more preferably substantially less than 10 ms, and even more preferably substantially less than 5 ms.

In order to ensure the correct arrangement of the sheets 10, the contact bodies 31 define a pressure surface having an arched shape with its centre substantially lying on the rotation axis 30a. Alternatively, as shown in Fig. 1a-1b, the bodies 31 define a pressure surface presenting two flat portions, suitably inclined towards each other such as to have a suitable contact between the body 31 and sheets 100.

The functioning of a collector device for corrugated board described above in a structural sense, is as follows.

In particular, the functioning of the collector device 1 describes an innovative collection method of sheets 10 and, preferably, sheets in corrugated board.

In brief, the collection method of sheets 10 provides for the movement of the sheets 10 along a slide surface 100b; the passage, substantially by gravity, of the sheets 10 from the slide surface 100b to the support surface 20a; and, during such passage, the braking by means of applying a braking force exclusively on the tail portion 12.

In detail, in such procedure, once the sheet 10 has left the cutter unit 110, it reaches the thrust unit 120 which increases its speed so as to be distanced from the subsequent sheet 10. In particular, the thrust unit accelerates the sheet 10 bringing it to a speed substantially comprised between 180 m/min and 200 m/min.

The sheet 10, gradually as it passes the thrust unit 120, begins to protrude from said thrust unit 120 until, when it has fully exited the thrust unit 120, it falls substantially by gravity onto the conveyor 20.

When the sheet 10 has practically entirely left the thrust unit 120, the braking action begins.

In such action, the pressure body 30 applies a braking force to the tail portion 12 of the sheet 10 which reduces the speed of advancement of the sheet 10 enabling its fish-scale arrangement. In particular, such braking force is applied by the contact bodies 31 which being controlled by the motor 32a in an antagonist manner to the direction of advancement 100a, push the sheet 10 with a force opposite to its advancement thereby able to cause the slowing down of said sheet 10.

In particular the contact bodies 31 are also commanded in a resistant action, preferably the contact bodies 31 are commanded mainly in a resistant action, and more preferably substantially exclusively, or exclusively, in a resistant action.

The term resistant action is taken to mean the force of resistance to external stresses of the contact bodies 31, given for example by the torque or angular momentum of the motor 32.

In addition, the motor 32a, commanding the contact bodies 31, brings the pressure surface to contrast exclusively the tail portion 12.

In particular, the tail portion 11 of the sheet 10 comes into contact or extremely close, to the order of millimetres, to the contact bodies 31 when these have a reduced angular momentum value. The contact bodies 31 do not therefore substantially exercise actions or forces on said leading edge 11 of the sheet 10, but rather, the leading edge 11 of the sheet 10 can shift the contact body 31, should it be along its trajectory, without undergoing substantial changes of trajectory and/or flexing structure.

In a subsequent moment, the tail portion 12 of the sheet 10 comes into contact with the contact bodies 31 when these have a high angular momentum value or torque and even when these rotate in a thrust direction on the sheet 10. The rotation is limited to a maximum excursion preferably of less than 5 cm and more preferably less than 2 cm. The contact bodies 31 thus exert substantial actions or forces on the tail 12 of the sheet 10, and change its trajectory determining a slight rotation of the sheet 10, aimed at distancing the leading portion 11 from the support surface 20a without substantially flexing the sheet 10.

The torque and angular momentum values given to the bodies 31 by the motor 32a vary according to the weight, speed and friction coefficient of the sheet.

In conclusion, thanks to the actions described above, the pressure body 30 causes the slowing and rotation of the sheet 10 so as to assure the fish-scale arrangement of the sheets 10 on the conveyor 20.

The sheets 10, thus arranged on the support surface 20a are lastly moved by the conveyor 20 and brought to the container where they fall, arranging themselves neatly therein.

The invention achieves some important advantages.

A first advantage is represented by the fact that conversely to what happens in the known devices, the collector device 1 and method described above ensure that the sheets 10 do not undergo warping or other deformations which would prejudice their future use.

In detail, such advantage has been achieved thanks to the innovative pressure body 30, which, while the sheet 10 is substantially falling, applies a force solely on the tail portion 12, which acts so that such braking force is applied when the action of the thrust unit 120 is practically exhausted thereby preventing opposite forces (the braking force and the thrust of the thrust unit 120) from acting on the sheet 10 which could lead to warping of said sheet.

Another advantage is the control of the contact bodies 31 in pairs by the motor 32a. This permits a high speed of action of said contact body 31, given that it must not move or must move minimally. Such speed is essential in the plants in question, in which the board produced may reach a speed of 350 m/min.

Yet another advantage, achieved thanks to the collector device 1 and to the collection method, is the fact that it enables a production of sheets 10 in corrugated board characterised by a practically total absence of production discards. Another advantage is therefore the fact that, by not causing deformations on the sheet 10, the collector device 1 and the method permit particularly high production speeds.

In particular, such advantage is achieved thanks to the use of a low inertia motor 32a and in particular, thanks to the use of a permanent magnet motor which, being characterised by low inertia, enables a particularly fast response and therefore, appropriately proportionate to the speed of advancement of the sheet 10.

Another advantage of no less importance is therefore the high efficiency, speed and therefore reduced costs characterising the production of corrugated board sheets.

Modifications and variations may be made to the invention described herein without departing from the scope of the inventive concept. All the elements as described and claimed herein may be replaced with equivalent elements and the scope of the invention includes all other details, materials, shapes and dimensions.

## Claims

1. Collector device (1) for sheets (10) comprising a conveyor (20) suitable to move said sheets (10) defining for said sheets (10) a leading portion (11) and a tail portion (12) and defining a support surface (20a) on which said sheets (10) are substantially arranged by gravity reciprocally overlapping said leading portion (11) and said tail portion (12); a pressure body (30), suitable to press on said sheets (10) before such sheets (10) come into contact with said support surface (20a), and **characterised in that** said pressure body (30) comprises at least one substantially rigid contact body (31) and a motor apparatus (32) suit-able to command said at least one contact body (31) varying at least the resistance action so as to exert an action substantially exclusively in correspondence with said tail portion (12) of said sheets (10).

2. Collector device (1) as claimed in claim 1, in which said motor apparatus (32) is substantially exclusively suitable to vary the resistance action of said contact bodies (31).

3. Collector device (1) as claimed in claim 2, in which said motor apparatus (32) is suitable to move said contact body (31).

4. Collector device (1) as claimed in claim 1, in which said motor apparatus (32) is suitable to move said at least one contact body (31) according to a rotation axis (30a).

5. Collector device (1) as claimed in claim 4, wherein said motor apparatus (32) is a brushless motor.

6. Collector device (1) as claimed in claim 5, wherein said rotation axis (30a) is substantially parallel to said support surface (20a).

7. Corrugating machine (100) for the production of corrugated board comprising a collector device (1) for sheets (10) comprising a conveyor (20) suitable to move said sheets (10) defining for said sheets (10) a leading portion (11) and a tail portion (12) and defining a support surface (20a) on which said sheets (10) are substantially arranged by gravity reciprocally overlapping said leading portion (11) and said tail portion (12); a pressure body (30), suitable to press on said sheets (10) before such sheets (10) come into contact with said support surface (20a), said pressure body (30) comprising at least one substantially rigid contact body (31) and a motor apparatus (32) suitable to command said at least one contact body (31) varying at least the resistance action so as to exert an action substantially exclusively in correspondence with said tail portion (12) of said sheets (10).

8. Method of collecting sheets (10) implemented by a collector device (1) said procedure comprising: the movement of said sheets (100) along a slide surface (100b) according to an advancement trajectory (100a) defining a tail portion (12) and a leading portion (11) of said sheets (10); the passage substantially by gravity of said sheets (10) from said slide surface (100b) to a support surface (20a); **characterised in that** during said passage said sheet (10) is braked by application of a braking force by means of the action of a substantially rigid contact body (31), part of said collector device (1) and of a pressure body (30), wherein said pressure body (30) exerts an action substantially exclusively in correspondence with said tail portion (12) of said sheets (10).

9. **.** Collection method as claimed in the previous claim, in which said pressure body (30) substantially varies the resistance action of said contact body (31).

10. Collection method as claimed in claim 8 or 9, wherein said pressure body (30) moves said contact body (31) by a maximum distance of less than 5 cm.
